# DEMANDE DE BREVET EUROPEEN

(11) **EP 3 761 398 A1**
(43) Date de publication de la demande: **06.01.2021**
(21) Numéro de dépôt: 20183649.1
(22) Date de dépôt: 02.07.2020
(51) Int. Cl.: H01M 2/14, H01M 10/0565

(54) **ELECTROLYTE POLYMERIQUE SOLIDE**

(30) Priorité: 04.07.2019 FR 1907490
(71) Demandeur: Commissariat à l'Energie Atomique et aux Energies Alternatives, 75015 Paris (FR)
(72) Inventeur: LASSAGNE, Adrien, 38054 Grenoble cedex 09 (FR); BARCHASZ, Céline, 38054 Grenoble cedex 09 (FR); PICARD, Lionel, 38054 Grenoble cedex 09 (FR)
(74) Mandataire: Nony

(57) **Abrégé**

La présente invention concerne un procédé de préparation d'un film d'électrolyte polymérique solide, comprenant au moins les étapes consistant en :
(i) disposer d'une composition, comprenant, dans un ou plusieurs solvant(s), au moins un (co)polymère d'au moins un monomère cyclique choisi parmi les lactones et les carbonates cycliques de cinq à huit chaînons ; le ou lesdits (co)polymères présentant des fonctions hydroxyle terminales libres ; au moins un agent de réticulation, au moins un sel conducteur ionique, en particulier un sel de lithium ; et éventuellement, dans le cas d'un agent de réticulation porteur d'au moins une fonction réactive photosensible, au moins un composé photo-initiateur ;
(ii) former un film sec à partir de ladite composition, dans des conditions non propices à la réticulation du ou desdits (co)polymère(s) ; et
(iii) porter ledit film dans des conditions propices à la réticulation du ou desdits (co)polymères pour former le film d'électrolyte polymérique solide.

Elle concerne encore le film d'électrolyte polymérique solide ainsi obtenu ; et son utilisation dans un système électrochimique, en particulier dans une batterie au lithium.

## Description

### Domaine technique

La présente invention se rapporte à la préparation d'un nouvel électrolyte polymérique solide, ainsi qu'à l'électrolyte polymérique solide ainsi obtenu.

De tels électrolytes peuvent être utilisés dans différents systèmes ou dispositifs électrochimiques, notamment dans des batteries au lithium.

### Technique antérieure

D'une manière classique, le principe de fonctionnement d'un générateur électrochimique repose sur l'insertion et le retrait, aussi appelé « désinsertion », d'un ion de métal alcalin ou d'un proton, dans et depuis l'électrode positive, et le dépôt ou l'extraction de cet ion, sur et de l'électrode négative.

Les principaux systèmes utilisent le cation lithium comme espèce ionique de transport. Dans le cas d'un accumulateur au lithium par exemple, le cation lithium extrait de l'électrode positive lors de la charge de la batterie vient se déposer sur l'électrode négative, et inversement, il s'extrait de l'électrode négative pour s'intercaler dans l'électrode positive lors de la décharge.

Le transport du proton ou du cation alcalin ou alcalino-terreux, en particulier du cation lithium, entre l'électrode positive et l'électrode négative, est assuré par un électrolyte conducteur ionique.

La formulation de l'électrolyte utilisé revêt un caractère essentiel pour les performances du système électrochimique, en particulier lorsque celui-ci est utilisé à des températures très basses ou très élevées. La conductivité ionique de l'électrolyte conditionne notamment l'efficacité du système électrochimique étant donné qu'elle intervient sur la mobilité des ions entre les électrodes positive et négative.

D'autres paramètres interviennent également dans le choix de l'électrolyte mis en œuvre. Il s'agit notamment de sa stabilité thermique, chimique ou électrochimique au sein du système électrochimique, ainsi que des critères économiques, de sécurité et de respect de l'environnement, incluant notamment la toxicité de l'électrolyte.

D'une manière générale, les électrolytes des systèmes électrochimiques se présentent sous forme liquide, gélifiée ou solide.

En ce qui concerne les électrolytes sous forme liquide, les électrolytes conventionnels de générateurs électrochimiques avec un cation métallique de l'une des deux premières colonnes du tableau périodique des éléments, par exemple au lithium, sont composés d'un sel de ce cation dissous dans un milieu organique ou aqueux (classiquement dans des solvants carbonates, acétonitrile pour les batteries au lithium), en présence ou non d'additifs. Par exemple, les électrolytes conventionnels de supercapacité sont composés d'un sel organique (classiquement un sel de tétraéthylammonium tétrafluoroborate Et₄N-BF₄) dissous dans de l'acétonitrile.

Leur utilisation en système complet de stockage électrochimique, par exemple dans une batterie Li-ion, nécessite toutefois d'ajouter un séparateur pour assurer une isolation électrique entre les électrodes positive et négative. Également, même si ces électrolytes présentent de bonnes conductivités ioniques, ils posent toutefois des problèmes de sécurité et de coût dans le cadre de la mise en œuvre de solvants organiques (stabilité thermique faible), et de stabilité électrochimique dans le cadre de la mise en œuvre d'un milieu aqueux. Concernant les électrolytes gélifiés, il s'agit d'électrolytes liquides, par exemple tels que décrits précédemment, emprisonnés dans un polymère « hôte ». Le ou les solvants de l'électrolyte liquide doivent présenter une affinité avec le polymère hôte, ni trop élevée (solubilisation du polymère), ni trop faible (exsudation). Le polymère hôte doit permettre une incorporation maximale de liquide tout en conservant des propriétés mécaniques pour garantir la séparation physique entre les deux électrodes.

Enfin, pour répondre aux problématiques de sécurité liées à la présence du solvant, il a été proposé de mettre en œuvre des électrolytes polymères solides, exempts de solvant. Ces polymères entrant dans la composition de l'électrolyte doivent présenter de bonnes propriétés de conduction ionique afin de pouvoir être utilisés de façon satisfaisante dans des systèmes générateurs et de stockage électrochimiques.

Les électrolytes polymères les plus répandus pour des dispositifs électrochimiques au lithium sont à base de polyéther, et plus particulièrement de poly(oxyéthylène) (POE), dans lesquels est dissous un sel de métal alcalin ou alcalino-terreux (suivant la chimie des électrodes). Toutefois, ces électrolytes présentent des performances limitées en matière de conductivité ionique liées au mécanisme de transport du cation, dit « assisté », et nécessitent une température d'utilisation élevée (60 °C à 80 °C). Les polymères sont ainsi conducteurs dans un état physique fondu.

Différentes études ont été menées en vue d'améliorer les performances de conduction ionique des électrolytes polymériques.

Il a par exemple été proposé de développer des dérivés de POE rendus amorphes par copolymérisation, des copolymères avec des chaines latérales flexibles à base de POE et de polysiloxane, ou encore des copolymères à base de polysiloxane présentant des chaînes de POE greffées. D'une manière générale, l'amélioration des performances de conduction ionique se fait malheureusement au détriment de l'intégrité mécanique de l'électrolyte polymérique solide.

Mindermark *et al.* [1] proposent par exemple un électrolyte polymérique à base de copolymère poly(ε-caprolactone) (PCL)/poly(triméthylène carbonate) (PTMC). En particulier, cette publication rapporte que l'incorporation d'unités carbonates dans des chaînes polymériques poly(ε-caprolactone) (PCL) permet, en supprimant la cristallinité du polyester, d'accroître la conductivité ionique du matériau électrolyte solide. Le film d'électrolyte solide à base de PCL/PTMC (80/20 massique) est testé au sein d'une batterie au lithium entre une électrode négative de lithium métallique et une électrode positive de LiFePO₄. Toutefois, l'utilisation d'une électrode positive de LiFePO₄ réduit considérablement la densité d'énergie de la batterie, comparativement par exemple à la mise en œuvre d'une électrode de type LiCoO₂. Par ailleurs, ces électrolytes présentent une mauvaise stabilité mécanique lorsqu'ils sont portés à une température supérieure ou égale à leur température de fusion ; ils ne sont alors plus solides mais sous la forme de liquides visqueux. Enfin, comme illustré dans les tests de cyclage en batterie Li⁰ vs. LiNi_{1/3}Mn_{1/3}Co_{1/3}O₂, présentés en exemple 1, la tenue mécanique de ces électrolytes solides à base de PCL/PTMC est insuffisante pour bloquer le phénomène de croissance de dendrite de lithium, et donc les risques de court-circuit de l'accumulateur.

Par ailleurs, le document EP 1 347 462 décrit la formation d'un électrolyte de type gélifié à partir d'une composition de résine comprenant un monomère durcissable ayant des groupes réactifs de type (méth)acrylate, par exemple un monomère de type caprolactone modifié par l'hexaacrylate de dipentaerythritol, un agent plastifiant et un sel d'électrolyte. L'électrolyte obtenu, présentant un rapport massique résine/plastifiant de l'ordre de 1/9, est un électrolyte gélifié, le plastifiant étant plus communément appelé solvant dans le cadre de tels électrolytes.

Pour des raisons évidentes, l'amélioration des performances des électrolytes relève d'un objectif permanent.

### Résumé de l'invention

La présente invention vise précisément à accéder à de nouveaux électrolytes polymériques solides, combinant d'excellentes performances en termes de conductivité ionique, sans ajout d'additifs plastifiants, et de stabilité mécanique.

Plus particulièrement, elle concerne, selon un premier de ses aspects, un procédé de préparation d'un film d'électrolyte polymérique solide, comprenant au moins les étapes suivantes :
(i) disposer d'une composition, comprenant, dans un ou plusieurs solvant(s) :
   - au moins un (co)polymère d'au moins un monomère cyclique choisi parmi les lactones et les carbonates cycliques de cinq à huit chaînons ; le ou lesdits (co)polymères présentant des fonctions hydroxyle terminales libres (-OH) ;
   - au moins une molécule organique, dite « agent de réticulation », porteuse d'au moins deux fonctions réactives, ladite molécule étant apte à permettre, sous l'action d'une stimulation extérieure, en particulier sous l'action de la chaleur et/ou d'un rayonnement UV, la réticulation du ou desdits (co)polymère(s) par réaction avec les fonctions hydroxyle du ou desdits (co)polymère(s) ;
   - au moins un sel conducteur ionique, en particulier un sel de lithium ; et
   - éventuellement, dans le cas d'un agent de réticulation porteur d'au moins une fonction réactive photosensible, au moins un composé photo-initiateur ;
(ii) former un film sec à partir de ladite composition, dans des conditions non propices à la réticulation du ou desdits (co)polymère(s) ; et
(iii) porter ledit film dans des conditions propices à la réticulation du ou desdits (co)polymères pour former le film d'électrolyte polymérique solide.

Selon une variante de réalisation, le film d'électrolyte polymérique solide selon l'invention peut être formé à partir d'un (co)polymère d'au moins une lactone, en particulier à partir d'au moins l'ε-caprolactone. En particulier, le (co)polymère mis en œuvre en étape (i) du procédé de l'invention peut être un homopolymère poly(ε-caprolactone) (PCL), ou encore un copolymère obtenu à partir de l'ε-caprolactone et d'un carbonate cyclique, par exemple le triméthylène carbonate, notamment un copolymère poly(ε-caprolactone) (PCL)/poly(triméthylène carbonate) (PTMC).

L'invention concerne encore un film d'électrolyte polymérique solide, en particulier tel qu'obtenu selon le procédé décrit précédemment, comprenant, voire étant formé, d'un réseau polymérique réticulé formé de (co)polymère(s) réticulés d'au moins un monomère cyclique choisi parmi les lactones et les carbonates cycliques de cinq à huit chaînons ; et au moins un sel conducteur ionique, en particulier un sel de lithium.

Par « électrolyte solide », on entend un électrolyte excluant la présence d'un composant sous forme liquide, et faisant office à la fois de séparateur et de conducteur ionique dans un système électrochimique.

En particulier, le réseau polymérique réticulé dudit électrolyte polymérique solide forme plus de 50 % massique, en particulier plus de 75 % massique, de la masse totale dudit électrolyte solide.

De manière avantageuse, le film d'électrolyte polymérique solide selon l'invention est exempt d'agents plastifiants, tels que des carbonates, par exemple le carbonate d'éthylène ou le carbonate de diéthyle.

En particulier, le film d'électrolyte polymérique solide selon l'invention est distinct d'un électrolyte de type gélifié, comprenant une quantité majoritaire de plastifiant, plus communément appelé solvant.

L'électrolyte solide selon l'invention peut être mis en œuvre dans de nombreux systèmes électrochimiques, tels que les générateurs, en particulier des batteries au lithium. L'électrolyte polymérique solide obtenu selon l'invention s'avère avantageux à plusieurs titres.

Il présente ainsi d'excellentes performances en termes de conductivité ionique, même en l'absence d'additifs. En particulier, il présente avantageusement une conductivité ionique, mesurée à 25 °C, supérieure ou égale à 10⁻⁶ S.cm⁻¹, en particulier supérieure ou égale à 5.10⁻⁶ S.cm⁻¹ Également, il présente une conductivité ionique, mesurée à 60 °C, supérieure ou égale à 10⁻⁵ S.cm⁻¹, en particulier supérieure ou égale à 3.10⁻⁵ S/cm⁻¹.

Par ailleurs, le réseau polymérique d'un électrolyte solide selon l'invention présente une bonne stabilité, même pour des températures élevées, en particulier allant jusqu'à 150 °C. L'électrolyte polymérique solide obtenu selon l'invention présente ainsi une bonne stabilité thermique et électrochimique, permettant ainsi la mise en œuvre de températures de fonctionnement du système électrochimique dans lequel il est mis en œuvre, élevées.

De manière avantageuse, comme illustré dans les exemples qui suivent, l'électrolyte polymérique solide selon l'invention peut avantageusement être utilisé dans des batteries de densité énergétique élevée, telles que des batteries Li⁰ vs. LiNi_{1/3}Mn_{1/3}Co_{1/3}O₂, sans impacter la stabilité thermique et électrochimique de l'électrolyte, en particulier en limitant le phénomène de croissance dendritique du lithium et les risques afférents de court-circuit. L'invention concerne encore, selon un autre de ses aspects, l'utilisation d'un film d'électrolyte polymérique solide selon l'invention dans un système électrochimique, en particulier dans une batterie au lithium, notamment une batterie lithium-métal.

Elle concerne encore un système électrochimique, en particulier une batterie au lithium, comprenant un film d'électrolyte polymérique solide selon l'invention, en particulier tel qu'obtenu selon le procédé décrit précédemment.

D'autres caractéristiques, variantes et avantages de l'électrolyte polymérique solide selon l'invention, et de sa préparation, ressortiront mieux à la lecture de la description, des exemples et figures qui vont suivre, donnés à titre illustratif et non limitatif de l'invention.

### Brève description des dessins

[Fig 1] présente les spectres infrarouge, respectivement de l'électrolyte à base polycaprolactone réticulé selon l'invention (« PCL :LiTFSI (4:1) réticulé ») et de l'électrolyte à base de polycaprolactone non réticulé (« PCL :LiTFSI (4:1) ») non conforme à l'invention, préparés selon l'exemple 1.
[Fig 2] présente les courbes d'évolution du module de conservation G' et du facteur d'amortissement tan delta = G"/G' obtenues par analyse mécanique dynamique (DMA) du matériau polycaprolactone seul (« PCL »), de l'électrolyte à base de polycaprolactone non réticulé (« PCL + sel ») non conforme à l'invention et de l'électrolyte à base polycaprolactone réticulé selon l'invention (« PCL réticulé + sel »), préparés selon l'exemple 1.
[Fig 3] représente l'évolution de la conductivité ionqiue (en S.cm⁻¹) en fonction de la température (1000/T, T étant exprimée en degré Kelvin) pour l'électrolyte à base polycaprolactone réticulé selon l'invention (« PCL :LiTFSI réticulé ») et pour l'électrolyte
à base de polycaprolactone non réticulé (« PCL :LiTFSI (4:1)») non conforme à l'invention, préparés selon l'exemple 1.
[Fig 4] représente le voltampérogramme obtenu avec le montage électrochimique décrit en exemple 1, intégrant l'électrolyte à base de polycaprolactone non réticulé (« PCL :LiTFSI (4:1) ») non conforme à l'invention, préparés selon l'exemple 1 pour un premier cycle de balayage de potentiel à 1 mV/s à une température de 80 °C.
[Fig 5] représente le voltampérogramme obtenu avec le montage électrochimique décrit en exemple 1, intégrant l'électrolyte à base de polycaprolactone réticulé (« PCL :LiTFSI (4:1) réticulé ») conforme à l'invention, préparés selon l'exemple 1 pour un premier cycle de balayage de potentiel à 1 mV/s à une température de 80 °C.
[Fig 6] représente les courbes de cyclage dans une cellule symétrique Li⁰/électrolyte/Li⁰, mettant en œuvre l'électrolyte à base de polycaprolactone non réticulé (« PCL :LiTFSI (4:1) »), comme décrit en exemple 1.
[Fig 7] représente les courbes de cyclage dans une cellule symétrique Li⁰/électrolyte/Li⁰, mettant en œuvre l'électrolyte à base de polycaprolactone réticulé selon l'invention (« PCL :LiTFSI (4:1) réticulé »), comme décrit en exemple 1.
[Fig 8] représente les courbes de cyclage dans une batterie Li⁰ vs. LiNi_{1/3}Mn_{1/3}Co_{1/3}O₂ mettant en œuvre l'électrolyte à base de polycaprolactone non réticulé (« PCL :LiTFSI (4:1) »), comme décrit en exemple 1.
[Fig 9] représente l'évolution de la conductivité ionique (en S.cm⁻¹) en fonction de la température (1000/T, T étant exprimée en degré Kelvin) pour l'électrolyte à base de copolymère polycaprolactone/polytriméthylène carbonate réticulé selon l'invention (« PCLcoPTMC :LiTFSI réticulé») et pour l'électrolyte à base de copolymère polycaprolactone/polytriméthylène carbonate non réticulé (« PCLcoPTMC :LiTFSI (4:1) ») non conforme à l'invention, préparés selon l'exemple 2.

Dans la suite du texte, les expressions « compris entre ... et ... » et « allant de ... à ... » et « variant de ... à ... » sont équivalentes et entendent signifier que les bornes sont incluses, sauf mention contraire.

### Description détaillée

### COMPOSITION PRECURSEUR DE L'ELECTROLYTE SOLIDE

Comme indiqué précédemment, la préparation d'un électrolyte polymérique solide selon l'invention procède, dans un premier temps, à la préparation d'une composition comprenant, dans un ou plusieurs solvant(s) :
- au moins un (co)polymère d'au moins un monomère cyclique choisi parmi les lactones et les carbonates cycliques de cinq à huit chaînons ; le ou lesdits (co)polymères présentant des fonctions hydroxyle terminales libres ;
- au moins un agent de réticulation, apte à permettre, sous l'action d'une stimulation extérieure, en particulier sous l'action de la chaleur et/ou d'un rayonnement UV, la réticulation du ou desdits (co)polymère(s) par réaction avec les fonctions hydroxyle ; et
- au moins un sel d'électrolyte, en particulier un sel de lithium.

On désigne plus simplement la composition mise en œuvre en étape (i) du procédé de l'invention, sous l'appellation « composition précurseur de l'électrolyte solide ».

### (Co)polymère porteur de fonctions hydroxyle

Par « copolymère », on entend en particulier un polymère dérivé d'au moins deux espèces différentes de monomères.

Dans la présente description, en l'absence d'indications contraires, le terme "polymère" sera utilisé pour désigner, au sens large, aussi bien des homopolymères que des copolymères. Le polymère mis en œuvre selon l'invention est plus particulièrement un polymère branché. Par « branché », on entend désigner un polymère non linéaire qui possède des chaînes pendantes.

Comme détaillé dans la suite du texte, le (co)polymère, porteur de fonctions hydroxyle (-OH) terminales, peut être plus particulièrement obtenu, préalablement à la mise en œuvre du procédé de l'invention, par (co)polymérisation d'un ou plusieurs monomères cycliques choisis parmi les lactones et les carbonates cycliques de cinq à huit chaînons, en présence d'au moins une molécule organique, dite « amorceur », portant au moins trois fonctions hydroxyle et, éventuellement, en présence d'au moins un catalyseur de la réaction de (co)polymérisation.

Les monomères cycliques répondent plus particulièrement à la formule (I) suivante : 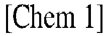 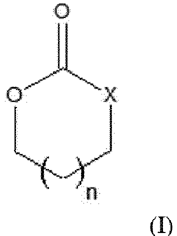 dans laquelle :
- X représente un atome de carbone ou un atome d'oxygène ;
- n vaut 0 ou est un entier compris entre 1 et 9, en particulier entre 1 et 3 ;
lesdits monomères étant éventuellement substitués, sur un ou plusieurs des atomes de carbone du cycle, par un ou plusieurs substituants R.

Les substituants du monomère cyclique, R, peuvent être plus particulièrement choisis parmi des groupements alkyles, en particulier en C₁ à C₅, linéaires ou ramifiés, saturés ou non ; des atomes d'halogène ; des fonction hydroxyle, carboxyle, -SO₃H et amine, en particulier - NH₂ ; lesdits groupements alkyles étant éventuellement porteurs d'un ou plusieurs groupes choisis parmi des atomes d'halogène, des fonctions hydroxyle, carboxyle, -SO₃H et amine, en particulier -NH₂. Il peut s'agir par exemple de groupements (méth)acrylates.

Selon un mode de réalisation particulier, le (co)polymère est formé à partir d'au moins un monomère de type lactone.

Par lactone, on entend plus particulièrement des monomères répondant à la formule (II) suivante : 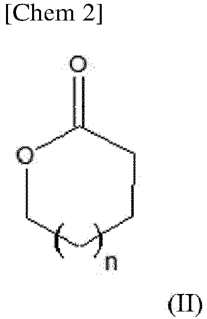 dans laquelle n est un entier allant de 1 à 9, en particulier de 1 à 3 ;
lesdits monomères étant éventuellement substitués, sur un ou plusieurs des atomes de carbone du cycle, par un ou plusieurs substituants R, tels que définis précédemment.

Des exemples de lactones comprenant plus particulièrement les β-, γ-, δ- et ε-lactones saturées ou insaturées, substituées ou non, comportant de 4 à 11 atomes de carbone, telles que l'ε-caprolactone, la δ-valérolactone, la γ-butyrolactone, la δ-caprolactone racémique ou non, la β-butyrolactone, racémique ou non.

Ainsi, le (co)polymère mis en œuvre en étape (i) du procédé de l'invention peut être formé à partir d'au moins un monomère de formule (II) précitée.

De préférence, le (co)polymère selon l'invention est formé à partir d'au moins l'ε-caprolactone.

Les carbonates cycliques peuvent être plus particulièrement de formule (III) suivante : 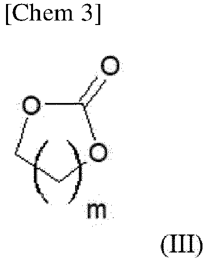 m étant un entier compris entre 1 et 3, de préférence m vaut 1 ou 2 ;
lesdits monomères étant éventuellement substitués, sur un ou plusieurs des atomes de carbone du cycle, par un ou plusieurs substituants R tels que définis précédemment.

A titre d'exemple de monomère carbonate cyclique, on peut citer le triméthylène carbonate et ses dérivés.

Selon un mode de réalisation particulier, le polymère selon l'invention peut être un homopolymère formé à partir d'un monomère de type lactone, par exemple un homopolymère poly(ε-caprolactone) (PCL).

Selon une autre variante de réalisation, le polymère selon l'invention est un copolymère obtenu à partir d'au moins un monomère de type lactone, par exemple l'ε-caprolactone et d'au moins un monomère de type carbonate cyclique, par exemple le triméthylène carbonate. A titre d'exemple, il peut s'agir d'un copolymère poly(ε-caprolactone) (PCL)/poly(triméthylène carbonate) (PTMC).

### Préparation du (co)polymère

### Amorceur

Comme indiqué précédemment, la réaction de (co)polymérisation, permettant de conduire au polymère fonctionnalisé par des fonctions hydroxyle libres, est effectuée en présence d'une molécule organique, dite « amorceur », portant au moins trois fonctions hydroxyle. Par « amorceur », on entend désigner selon l'invention une molécule organique comportant au moins trois fonctions hydroxyle (-OH).

De préférence, l'amorceur est une molécule organique possédant de trois à cinq fonctions hydroxyle, de préférence trois ou quatre fonctions hydroxyle, et en particulier trois fonctions hydroxyle.

A titre d'exemples de telle molécule amorceur, on peut citer par exemple le pentaérythritol ou encore le glycérol.

L'amorceur peut présenter plus particulièrement une masse moléculaire moyenne en nombre allant de 90 à 1000 g/mol, en particulier allant de 90 à 350 g/mol.

L'amorceur va être intégré à l'issue de la (co)polymérisation à la chaîne macromoléculaire. A l'issue de la (co)polymérisation, les chaînes de (co)polymères présentent ainsi des fonctions hydroxyle terminales.

Le ou lesdits molécules amorceurs peuvent être mis en œuvre dans un rapport molaire monomère(s) cyclique(s)/amorceur(s) compris entre 1/30 et 1/10000, en particulier entre 1/300 et 1/4000.

### Catalyseur

La réaction de (co)polymérisation par ouverture de cycle des monomères de type lactone et/ou carbonate cyclique peut être avantageusement catalysée.

L'homme du métier est à même de choisir les catalyseurs adéquats pour la réaction de (co)polymérisation par ouverture de cycle. Des exemples de catalyseurs pour la copolymérisation de carbonates et de lactones fonctionnalisées sont par exemple décrits dans la publication [2].

Il peut s'agir par exemple d'un composé phosphoré substitué, tel que le diphénylphosphate (DPP), ou encore par des composés de type métalliques tel que le diéthylhexanoate d'étain (Sn(Oct)₂).

Le ou lesdits catalyseurs peuvent être mis en œuvre dans un rapport molaire catalyseur/fonctions hydroxyle de l'amorceur, compris entre 4/1 et 1/10, en particulier entre 1/1 et 1/3.

L'homme du métier est à même d'ajuster les conditions opératoires de la réaction de (co)polymérisation.

Le ou les monomères de type lactone et/ou carbonate cyclique peuvent être mis en œuvre à raison de 90 à 99 % massique, en particulier de 95 à 99 % massique, par rapport à la masse totale du mélange monomère(s), amorceur(s) et catalyseur(s).

En particulier, la réaction de (co)polymérisation peut être opérée à une température allant de 20 à 110 °C, en particulier de 40 à 80 °C.

La durée de polymérisation peut être comprise entre 2 heures et 4 jours, en particulier entre 1 et 2 jours.

La réaction est de préférence conduite sous agitation dans un milieu solvant ou en masse. Elle peut être mise en œuvre en continu, semi-continu ou de façon discontinue dans un réacteur.

De préférence, la réaction est réalisée dans un milieu solvant, typiquement formé d'un ou plusieurs solvant(s) apolaire(s) et aprotique(s), en particulier choisis parmi le toluène, le dichlorométhane, le tétrahydrofurane et leurs mélanges, de préférence dans le toluène.

A l'issue de la (co)polymérisation, le (co)polymère peut être soumis à une ou plusieurs étapes de purification, par exemple par précipitation dans un ou plusieurs solvants polaires, typiquement du méthanol, et récupéré par filtration.

Le (co)polymère obtenu selon l'invention présente avantageusement une masse moléculaire moyenne en nombre, notée Mn, supérieure ou égale à 3 kg.mol⁻¹, en particulier comprise entre 9 et 120 kg.mol⁻¹ et plus particulièrement comprise entre 30 et 80 kg.mol⁻¹.

La masse moléculaire moyenne en nombre peut être mesurée par chromatographie par perméation de gel (ou GPC). Elle peut être contrôlée par le rapport molaire du ou desdits monomère(s) à l'amorceur.

De préférence, le (co)polymère synthétisé selon l'invention peut présenter un indice de polydispersité, traduisant la bonne homogénéité des longueurs de chaîne du (co)polymère, inférieur ou égal à 2, de préférence inférieur ou égal à 1,5.

Le ou lesdits (co)polymères peuvent représenter plus de 70 % massique, en particulier plus de 80 % et notamment plus de 90 % massique, de la masse totale de la composition de l'étape (i) du procédé de l'invention, hors solvant(s).

### Agent de réticulation

La composition mise en œuvre en étape (i) du procédé de l'invention comprend au moins une molécule organique, dite « agent de réticulation ».

Par « agent de réticulation », on entend désigner au sens de l'invention une molécule organique porteuse d'au moins deux fonctions réactives, apte à permettre, sous l'action d'une stimulation extérieure, en particulier sous l'action de la chaleur et/ou d'un rayonnement UV, la réticulation du (co)polymère tel que défini ci-dessus.

Plus particulièrement, l'agent de réticulation mis en œuvre selon l'invention peut être choisi parmi :
- des molécules organiques, dites « thermo-activables », possédant au moins deux fonctions réactives, notées F1, chacune des fonctions étant apte à interagir, sous l'action de la chaleur, avec une fonction hydroxyle pour former une liaison covalente ;
- des molécules organiques, dites « photo-activables », possédant une fonction F1 apte à interagir, sous l'action de la chaleur, avec une fonction hydroxyle pour former une liaison covalente ; et au moins une fonction F2 photosensible, réactive sous l'action d'un rayonnement UV, en présence d'au moins un composé photo-initiateur.

Il est entendu que la ou lesdites molécules mises en œuvre comme agent réticulant sont solubles dans le milieu solvant de la composition de (co)polymères mise en œuvre en étape (i) du procédé de l'invention.

Par « soluble », on entend signifier qu'il est possible de dissoudre, dans les conditions de mise en œuvre, ledit agent réticulant à raison d'au moins 1 g pour 100 g de milieu solvant.

Selon un mode de réalisation particulier, l'agent de réticulation mis en œuvre selon l'invention peut être de formule (IV) suivante :

F1-E-G (IV),

dans laquelle :
F1 est une fonction apte à interagir, sous l'action de la chaleur, avec une fonction hydroxyle pour former une liaison covalente ;
E est un groupe espaceur organique ; et
G représente, soit une fonction F1, identique ou différente à la première fonction F1 ; soit une fonction F2 photosensible, réactive sous rayonnement UV.

Le groupe espaceur organique E peut être plus particulièrement une liaison simple ou un groupe hydrocarboné, en particulier comprenant de 1 à 20 atomes de carbone, et comprenant éventuellement une ou plusieurs insaturations et/ou un ou plusieurs hétéroatomes.

De manière avantageuse, le groupe espaceur E est de faible encombrement stérique. Un faible encombrement stérique des agents de réticulation permet d'accroître leur réactivité avec les fonctions hydroxyles du ou des (co)polymères, et ainsi de réduire la durée de l'étape de réticulation du ou desdits (co)polymères.

En particulier, E représente un groupe alkylène, linéaire ou ramifié, de préférence linéaire, ayant de 2 à 8 atomes de carbone, de préférence de 2 à 6 atomes de carbone.

La fonction F1 est apte à être activée sous l'effet d'un stimulus externe, en particulier sous l'action de la chaleur, pour créer une liaison covalente après réaction avec une fonction hydroxyle.

De préférence, la fonction F1 est apte à établir, par réaction avec une fonction hydroxyle, une liaison covalente de type uréthane.

En particulier, la fonction F1 peut être une fonction isocyanate (-N=C=O).

Selon une première variante de réalisation, ledit agent de réticulation est une molécule organique possédant au moins deux fonctions, notées F1, de préférence deux fonctions F1, chacune des fonctions étant apte à interagir avec une fonction hydroxyle pour former une liaison covalente, sous l'effet d'une stimulation extérieure, en particulier sous l'action de la chaleur.

En particulier, ladite molécule organique, mise en œuvre à titre d'agent réticulant, peut être de formule (IV) précitée, dans laquelle G représente une fonction F1, identique ou différente de la première fonction F1, de préférence identique.

De préférence, lesdites fonctions F1 sont des fonctions isocyanates.

Un tel agent réticulant est apte à permettre, sous l'action de la chaleur, la réticulation du (co)polymère tel que défini ci-dessus, par interaction des fonctions isocyanates avec les fonctions hydroxyles pendantes du ou desdits (co)polymère.

On parle d'agent de réticulation « thermo-activable », pour désigner un agent réticulant nécessitant, pour conduire à la réticulation du (co)polymère, l'action de la chaleur.

Ainsi, selon un mode de réalisation particulier, le procédé de l'invention met en œuvre, à titre d'agent réticulant, au moins une molécule organique porteuse d'au moins deux fonctions isocyanates, en particulier de deux fonctions isocyanates.

De préférence, l'agent réticulant est choisi parmi les diisocyanates aliphatiques. Par exemple, à titre de composé diisocyanate aliphatique, peuvent être cités l'hexaméthylènediisocyanate (HDI), l'isophoronediisocyanate (IPDI), le bis(4-isocyanatocyclohexyl)méthane (« MDI hydrogéné », H₁₂MDI), le xylylène diisocyanate hydrogéné (H₆XDI) et le m-tétraméthylxylylène diisocyanate (TMXDI).

Selon un mode de réalisation particulier, l'agent réticulant est l 'hexaméthylènediiosocyanate.

Selon un mode de réalisation particulier, l'agent réticulant est mis en œuvre dans la composition du ou desdits (co)polymères, conjointement avec au moins un catalyseur de la réaction de couplage entre une fonction hydroxyle et la fonction F1, en particulier isocyanate.

De tels catalyseurs peuvent être plus particulièrement choisis parmi les amines tertiaires tel que le 1,4-diazabicyclo[2,2,2]octane (DABCO), le 1-azabicyclo[2.2.2]octane (quinuclidine), le 1,8-Diazabicyclo[5.4.0]undec-7-ène (DBU, CAS : 6674-22-2), le 1,5-diazabicyclo[4.3.0]non-5-ène (DBN, CAS : 3001-72-7), le 3,3,6,9,9-pentaméthyl-2,10-diazabicyclo[4,4,0]déc-1-ène, le chlorure d'étain, les composés organométalliques tels que les acétonylacétates métalliques, les composés organométalliques de l'étain, l'hexanoate de calcium, le 2-éthylhexanoate de calcium, l'octanoate de calcium et le linoléate de calcium, le dilaurate de dibutylétain (DBTDL, CAS : 75-58-7), le tris(2-éthylhexanoate) de bismuth et le bis(2-éthylhexanoate) de zinc, les sulfonimides, tel que le bis(trifluorométhane)sulfonimide (TFMI, CAS : 82113-65-3), les acides sulfoniques, tel que l'acide trifluorométhanesulfonique (acide triflique), l'acide p-toluène sulfonique (PTSA, CAS : 104-15-4) et l'acide méthanesulfonique (MSA, CAS : 75-75-2), les dérivés phosphatés, tel que le diphénylphosphate (DPP, CAS : 838-85-7).

De préférence le catalyseur est choisi parmi le 1,4-diazabicyclo[2,2,2]octane (DABCO), le 1,8-diazabicyclo[5.4.0]undec-7-ène (DBU), le 1,5-diazabicyclo[4.3.0]non-5-ène (DBN), le dilaurate de dibutylétain (DBTDL), le bis(trifluorométhane), l'acide triflique, l'acide p-toluène sulfonique (PTSA), l'acide méthanesulfonique (MSA) et le diphénylphosphate (DPP).

Selon un mode de réalisation particulier, le catalyseur est le dilaurate de dibutylétain (DBTDL).

Le ou lesdits catalyseurs peuvent être mis en œuvre à raison de 0,1 % à 5 % massique, de préférence de 0,5 % à 1 % massique, par rapport à la masse totale de la composition.

Selon une autre variante de réalisation, ledit agent réticulant est une molécule organique possédant une fonction F1 apte à interagir, sous l'action de la chaleur, avec une fonction hydroxyle pour former une liaison covalente, en particulier une fonction isocyanate ; et au moins une fonction F2 réactive sous rayonnement UV.

On parle d'agent de réticulation « photo-activable », pour désigner un agent réticulant nécessitant, pour conduire à la réticulation du (co)polymère, l'action d'un rayonnement UV. La ou lesdites fonctions F2 peuvent être plus particulièrement choisies parmi des fonctions, dites photo-sensibles, aptes à réagir sous l'action d'un rayonnement UV et en présence d'un composé « photo-amorceur » (ou « photo-initiateur »).

De telles fonctions photo-sensibles sont bien connues de l'homme du métier. Il peut s'agir par exemple de fonctions à insaturation(s) éthylénique(s).

On entend par « fonction à insaturation(s) éthylénique(s) », un radical contenant au moins une fonction insaturée éthylénique, photo- ou thermo-polymérisable.

De préférence, la fonction à insaturation(s) éthylénique(s) est choisie parmi les fonctions (méth)acrylate et allylique.

En particulier, ladite molécule organique, mise en œuvre à titre d'agent réticulant, peut répondre à la formule (IV) précitée, dans laquelle F1 est telle que définie précédemment, en particulier F1 représente une fonction isocyanate ; et G représente une fonction F2, en particulier une fonction à insaturation(s) éthylénique(s), en particulier une fonction (méth)acrylate ou allylique.

A titre d'exemple, l'agent réticulant peut être l'isocyanate de méthacryloyloxyéthyle. Selon un mode de réalisation particulier, dans le cas de la mise en œuvre d'un agent de réticulation porteur d'au moins une fonction F2 photo-sensible, l'agent de réticulation est mis en œuvre dans la composition du ou desdits (co)polymères conjointement avec au moins un photo-amorceur.

Par « photo-amorceur », encore appelé « photo-initiateur », on entend désigner un composé chimique qui, sous l'action d'un rayonnement UV, permet d'activer la réaction d'une fonction F2 avec une autre fonction F2.

A titre d'exemple, on peut citer des photoamorceurs radicalaires, tels que des oxydes de phosphines, par exemple l'oxyde de diphényl(2,4,6-triméthylbenzoyl)phosphine (TPO). Le ou lesdits composés photo-initiateurs sont généralement mis en œuvre dans un rapport molaire photoinitiateur(s)/fonction(s) photosensible(s) d'environ 1/10.

La ou lesdites molécules, mises en œuvre comme agent de réticulation, peuvent être disponibles dans le commerce. Alternativement, elles peuvent être obtenues, préalablement à la mise en œuvre du procédé de l'invention.

En particulier, le ou lesdites molécules, mises en œuvre comme agent de réticulation et le ou lesdits (co)polymère(s) peuvent être mises en en œuvre dans un rapport molaire stoechiométrique.

### Sel conducteur ionique

Le mélange précurseur de l'électrolyte solide comprend en outre au moins un sel conducteur ionique, pour assurer la conduction des ions, tel qu'un sel de lithium lorsque l'électrolyte est destiné à une batterie au lithium.

Il peut s'agir d'un sel d'un métal alcalin ou d'un sel d'un métal alcalinoterreux.

Le sel d'un métal alcalin peut être par exemple un sel de lithium ou un sel de sodium ; le sel d'un métal alcalinoterreux peut être par exemple un sel de magnésium.

A titre d'exemples de sel de lithium, on peut citer le LiPF₆, LiClO₄, LiBF₄, LiAsF₆, LiCF₃SO₃, LiN(C₂F₅SO₂)₂, le bistrifluorométhylsulfonylimide de lithium LiN[SO₂CF₃]₂ (connu sous l'abréviation LiTFSI), le bis(fluorosulfonyl)amidure de lithium (connu sous l'abréviation LiFSI) LiN[SO₂F]₂ et les mélanges de ceux-ci.

De préférence, l'électrolyte comporte, comme sel de lithium, du LiPF₆ ou LiTFSI, de préférence du LiTFSI.

Le ou lesdits sels, par exemple le sel de lithium, peu(ven)t être présent(s), dans la composition de l'étape (i), en une teneur allant de 10 à 80 % massique, en particulier de 15 à 30 % massique, par rapport à la masse du ou desdits copolymères.

### Milieu solvant

Il est entendu que la nature du ou desdits solvants de la composition, précurseur de l'électrolyte solide selon l'invention, mise en œuvre en étape (i) est choisie au regard de la nature des composés mis en œuvre, en particulier de la nature de l'agent de réticulation et du ou desdits copolymères.

Le ou lesdits solvants sont plus particulièrement des solvants organiques polaires.

A titre d'exemples, ils peuvent être choisis parmi l'acétone, le tétrahydrofurane (THF) et leurs mélanges.

De préférence, le milieu solvant est le tétrahydrofurane.

Le ou lesdits solvants peuvent représenter de 50 à 95 % massique de la masse totale de ladite composition, en particulier de 75 à 90 % massique.

De préférence, la composition mise en œuvre en étape (i) est exempt d'additif plastifiant.

### FILM PRECURSEUR DE L'ELECTROLYTE

Une seconde étape du procédé de l'invention consiste à former un film sec à partir de la composition précurseur de l'électrolyte solide.

Par film « sec », on entend signifier que le film comprend moins de 20 % massique de solvant, en particulier moins de 10 % massique et plus particulièrement moins de 5 % massique de solvant.

Le film sec présente de préférence une épaisseur comprise entre 10 et 200 µm, en particulier entre 20 et 80 µm.

Selon une variante de réalisation particulière, le film sec peut être formé en surface d'un substrat puis, éventuellement désolidarisé dudit substrat pour former un film auto-supporté. Le film sec peut être obtenu par toute technique connue de l'homme du métier, par exemple *via* un procédé dit de coulée/évaporation, impliquant au moins les étapes suivantes :
- dépôt à la surface du substrat dudit mélange précurseur dans un ou plusieurs solvant(s) ; et
- évaporation du ou desdits solvants.

Il peut encore être obtenu par enduction suivie d'un séchage dans des conditions permettant l'évaporation du ou desdits solvants.

Par exemple, le ou lesdits solvants peuvent être évaporés à température ambiante en soumettant le mélange déposé à la surface du substrat à une ventilation.

Le substrat peut être de diverses natures. Il peut être en verre, en alumine ou encore en polypropylène.

Selon une variante de réalisation, le substrat peut être une des électrodes du système électrochimique auquel est destiné l'électrolyte solide selon l'invention.

Par exemple, pour la préparation d'un électrolyte solide destiné à une batterie au lithium, le substrat peut être une électrode lithiée.

Le film sec obtenu peut être éventuellement désolidarisé du substrat, pour donner un film auto-supporté.

Selon une autre variante de réalisation, en particulier lorsque l'agent de réticulation est choisi parmi les molécules organiques photo-activables, telles que définies précédemment, la composition précurseur dudit électrolyte peut être séchée dans des conditions propices à l'élimination du ou desdits solvants, puis mise en forme sous la forme d'un film, par exemple par pressage à chaud ou par extrusion.

Dans le cas de la mise en œuvre, à titre d'agent de réticulation, d'une ou plusieurs molécules organiques portant une fonction F1, en particulier une fonction isocyanate, et au moins une fonction F2, en particulier une fonction (méth)acrylate ou allylique, la composition peut être portée, préalablement à sa mise en forme, à une température propice à l'interaction des fonctions F1 avec les fonctions hydroxyle du ou desdits (co)polymères pour former des liaisons covalentes.

L'homme du métier est à même d'ajuster les conditions d'évaporation du ou des solvants pour obtenir le film sec souhaité.

La méthode de mise en forme de la composition précurseur de l'électrolyte solide selon l'invention, pour obtenir un film sec, et notamment les conditions de séchage, sont choisies, notamment au regard de la nature de l'agent réticulant, de manière à ne pas initier la réticulation du ou desdits copolymères selon l'invention.

### Réticulation du film

Une fois le film sec obtenu, celui-ci est soumis en étape (iii) à des conditions propices à la réticulation du ou desdites chaînes de (co)polymères.

Il est entendu que les conditions de réticulation du ou desdits (co)polymères sont ajustées au regard de la nature de la ou desdites molécules organiques mises en œuvre à titre d'agent de réticulation.

Ainsi, dans le cas de la mise en œuvre d'une molécule organique « thermo-activable », possédant au moins deux fonctions F1, en particulier isocyanate, telle que décrite précédemment, la réticulation peut être opérée en étape (iii) en portant ledit film sec à une température propice à la réaction des fonctions F1, en particulier isocyanates, avec les fonctions hydroxyles du ou desdits (co)polymères.

Il appartient à l'homme du métier d'ajuster la température et la durée de réticulation, pour atteindre un taux de réticulation suffisant pour obtenir les performances souhaitées pour l'électrolyte solide.

Ainsi, la réticulation en étape (iii), par réaction des fonctions isocyanates avec les fonctions hydroxyles, peut être opérée à une température comprise entre 60 et 120 °C, en particulier comprise entre 80 et 100°C, et pendant une durée allant de 5 minutes à 1 heure.

Dans le cas de fonctions F1 isocyanates, les chaînes de (co)polymères selon l'invention seront ainsi liées entre elles, à l'issue de la réticulation, par l'intermédiaire de liaisons covalentes de type uréthane (-NH-C(O)O-).

Selon une autre variante de réalisation, dans le cas de la mise en œuvre d'une molécule organique « photo-activable », possédant une fonction F1, en particulier isocyanate, et au moins une fonction F2 photosensible, activable en présence d'un composé photo-initiateur, par exemple une fonction (méth)acrylate ou allylique, la réticulation peut être opérée en étape (iii) *via* l'étape ou les étapes suivantes :
(a) éventuellement, dans le cas où les fonctions F1 n'ont pas réagi lors de la mise en forme du film sec avec les fonctions hydroxyles du ou desdits (co)polymères, porter ledit film à une température propice à l'interaction desdites fonctions F1, en particulier isocyanate, avec lesdites fonctions hydroxyles ; et
(b) porter ledit film sec à un rayonnement UV propice à l'activation des fonctions F2, en particulier (méth)acrylate ou allylique,
les étapes (a) et (b) pouvant être opérées consécutivement, dans cet ordre, ou simultanément. En particulier, la réticulation sous rayonnement UV peut être réalisée en exposant le film sec à une irradiation UV de longueur d'onde comprise entre 200 et 400 nm.

La durée de réticulation peut être comprise entre 30 secondes et 5 minutes, en particulier entre 30 secondes et 2 minutes.

Le film d'électrolyte polymérique réticulé, obtenu à l'issue du procédé de l'invention, peut être, le cas échéant, facilement désolidarisé du substrat sur lequel il est formé, pour donner un film d'électrolyte solide auto-supporté.

Le film d'électrolyte solide selon l'invention peut présenter une épaisseur comprise entre 10 et 100 µm, en particulier entre 15 et 60 µm.

### Système électrochimique

L'électrolyte polymérique solide obtenu selon l'invention peut être avantageusement mis en œuvre comme électrolyte solide dans un système électrochimique.

Le système électrochimique peut être un système générateur, convertisseur ou de stockage électrochimique. Il peut s'agir plus particulièrement d'une pile à combustible, par exemple une pile à combustible à membrane échangeuse de protons (PEMFC) ; une batterie primaire ou secondaire, par exemple une batterie au lithium, sodium, magnésium, potassium ou calcium ; un accumulateur lithium-air, lithium-soufre.

Selon un mode de réalisation particulier, l'électrolyte solide est mis en œuvre dans une batterie, en particulier dans une batterie au lithium, notamment une batterie lithium-ion ou lithium-métal.

En particulier, l'invention concerne encore, selon un autre de ses aspects, un ensemble électrode/membrane électrolytique, comprenant un film d'électrolyte polymérique réticulé selon l'invention.

Un système électrochimique selon l'invention comporte, d'une manière générale, au moins une électrode positive et une électrode négative entre lesquelles se trouve un film d'électrolyte solide agissant à la fois comme conducteur ionique et séparateur entre les électrodes positive et négative.

L'électrode positive d'une batterie au lithium comprend généralement, en tant que matière électrochimiquement active, des composés lamellaires, tels que LiCoO₂, LiNiO₂ et mixtes Li(Ni, Co, Mn, Al)O₂, ou des composés de structure spinelle de compositions proches de LiMn₂O₄, des phosphates du lithium, en particulier LiFePO₄.

De manière avantageuse, l'électrode positive comprend, en tant que matière électrochimiquement active, du LiNi_{1/3}Mn_{1/3}Co_{1/3}O₂ ou du LiCoO₂, de préférence du LiNi_{1/3}Mn_{1/3}Co_{1/3}O₂.

L'électrode négative comprend généralement, en tant que matière électrochimiquement active, du lithium métal dans le cas des accumulateurs primaires, ou des matériaux d'intercalation tels que le carbone graphite, ou de l'oxyde de titane lithié (Li₄Ti₅O₁₂), dans le cas des accumulateurs basés sur la technologie lithium-ion.

De manière avantageuse, il peut s'agir d'une batterie lithium-métal, comprenant une électrode en lithium métallique Li⁰ et une électrode comprenant du LiNi_{1/3}M_{n1/3}Co_{1/3}O₂ ou du LiCoO₂, de préférence du LiNi_{1/3}Mn_{1/3}Co_{1/3}O₂.

L'invention va maintenant être décrite au moyen des exemples et figures suivants, donnés bien entendu à titre illustratif et non limitatif de l'invention.

### Exemple

### Exemple 1

### 1.1. Préparation des électrolytes solides

### Préparation du polyester (polycaprolactone) fonctionnalisé par des fonctions hydroxyle

Dans un ballon de 50 mL, sont introduits 20 mg de pentaérythritol (1,47.10⁻⁴ mol ; 1 équivalent), 10 g de ε-caprolactone (8,77.10⁻² mol ; 597 équivalents), 100 mg de diphénylphosphate (4.10⁻⁴ mol ; 2,72 équivalents) et solubilisés dans 10 mL de toluène. L'ensemble est placé sous argon et sous agitation mécanique à 50 °C pendant 48 heures. Le milieu est ensuite refroidi à température ambiante, puis dilué avec 50 mL de tétrahydrofurane (THF), avant d'être précipité dans le méthanol (500 mL). Après filtration, le précipité est séché sous vide à 40 °C pendant 48 heures.

### Formation du film d'électrolyte solide

400 mg du polycaprolactone synthétisé sont solubilisés dans 2 mL de tétrahydrofurane (THF), en présence de 100 mg de sel de lithium LiTFSI et de 33 mg d'hexaméthylène diisocyanate, et de 10 µL de dilaurate de dibutylétain.

Le mélange est homogénéisé, dégazé sous vide puis coulé dans une boite de pétri en polypropylène. La boite de pétri est déposée à un endroit plan et sous ventilation de sorte que le solvant s'évapore.

Une fois sec, le film obtenu est exposé à une température de 80 °C pour réticulation par réaction des fonctions isocyanates avec les fonctions hydroxyles.

### Comparatif

A titre de comparaison, est formé un film d'électrolyte à base de polycaprolactone non réticulé.

Pour ce faire, 400 mg du polycaprolactone synthétisé sont solubilisés dans 2 mL de tétrahydrofurane (THF), en présence de 100 mg de sel de lithium LiTFSI. Le mélange est mis en œuvre sous la forme d'un film, par évaporation du solvant, dans les conditions décrites précédemment.

### 1.2. Caractérisation des électrolytes

### Caractérisation chimique - spectre IR

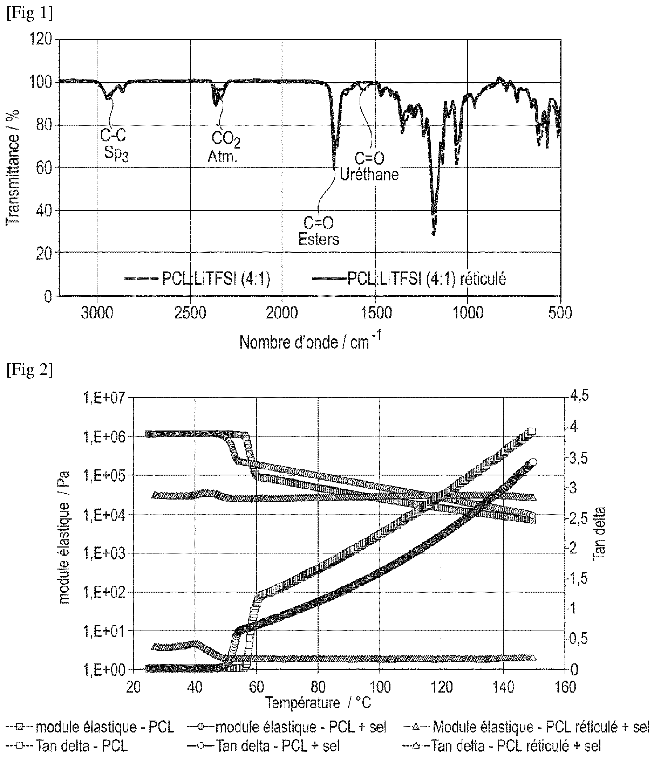

La figure 1 représente les spectres infrarouges, respectivement de l'électrolyte à base de polycaprolactone réticulé selon l'invention (« PCL :LiTFSI (4:1) réticulé ») et de l'électrolyte à base de polycaprolactone linéaire (non réticulé) (« PCL :LiTFSI (4:1) »). La comparaison des spectres IR permet de mettre en évidence la formation de liaisons uréthane dans le polymère réticulé, ce qui témoigne de la réaction entre les fonctions isocyanates de la molécule organique réticulant, et des fonctions hydroxyles du polycaprolactone.

### Caractérisation thermomécanique du matériau polymérique supramoléculaire

La caractérisation thermomécanique des matériaux d'électrolyte a été opérée par analyse mécanique dynamique (DMA), à l'aide d'un rhéomètre Malvern Gemini 2, équipé d'une géométrie plan/plan en acier avec une température gérée par un élément Peltier (-20°C - 180°C).

Le matériau est évalué par DMA au cours d'un balayage en température sous contrainte, en appliquant au matériau une déformation en cisaillement à une fréquence, dite fréquence de sollicitation, de 1 Hz et une déformation en cisaillement de 0,5 % pour le matériau électrolyte à base de polycaprolactone linéaire non réticulé et de 5 % pour le matériau électrolyte à base de polycaprolactone réticulé selon l'invention.

La figure 2 représente l'évolution du module de conservation G' (dit encore « module élastique ») et du facteur d'amortissement tan delta = G"/G' (qui caractérisent la partie visqueuse du matériau) pour le matériau polycaprolactone seul (« PCL »), pour l'électrolyte à base de polycaprolactone non réticulé (« PCL + sel ») non conforme à l'invention et pour l'électrolyte à base polycaprolactone réticulé selon l'invention (« PCL réticulé + sel »).

La DMA permet de valider l'absence de cristallinité dans l'électrolyte solide à base de polycaprolactone réticulé selon l'invention. Elle valide également l'absence de fluage à haute température (module élastique G' constant).

### Propriétés électrochimiques

### Conductivité ionique

Chacun des électrolytes est monté en pile bouton, entre deux électrodes Li⁰, pour obtenir leurs conductions ioniques en fonction de la température.

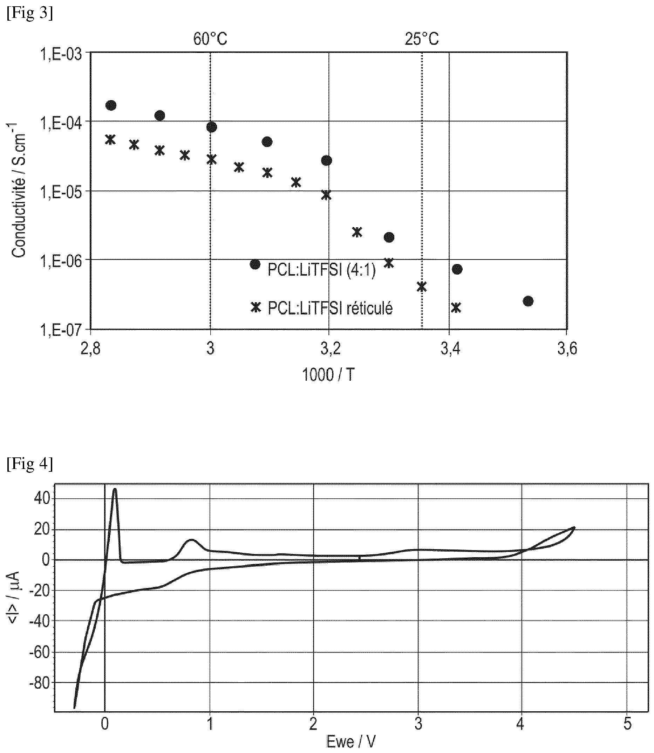

Les résultats sont représentés en figure 3. L'électrolyte solide selon l'invention permet d'atteindre une conductivité de 3.10⁻⁵ S.cm⁻¹ à 60°C.

### Stabilité électrochimique

Chacun des électrolytes est testé en pile bouton Li⁰/électrolyte/inox.

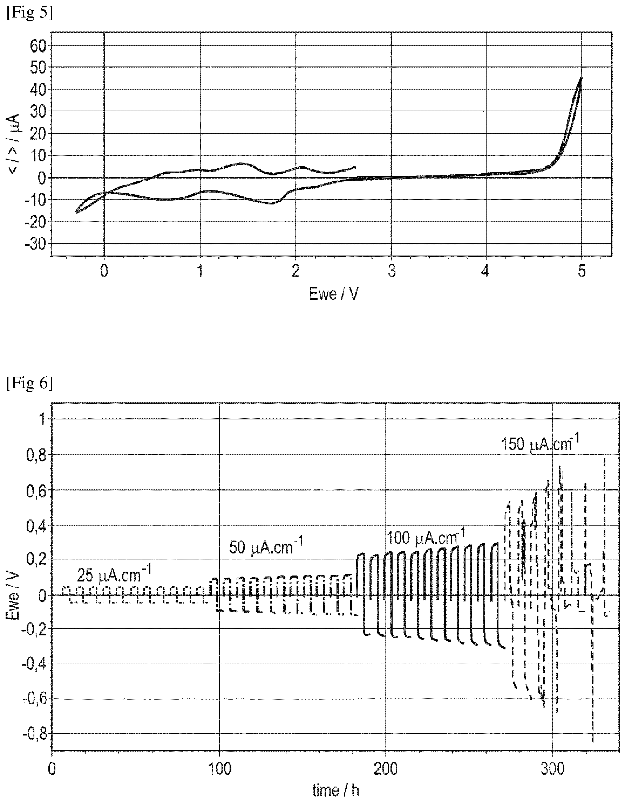

Les courbes de voltammétrie cyclique obtenues pour le premier cycle de balayage, à une température de 80 °C pour une vitesse de balayage de 1 mV/s, avec l'électrolyte à base polycaprolactone non réticulé et de l'électrolyte à base de polycaprolactone réticulé selon l'invention, sont représentées respectivement en figures 4 et 5.

L'électrolyte à base de polycaprolactone linéaire montre une stabilité en oxydation jusqu'à 4,1 V vs. Li⁰/Li.

L'électrolyte à base de de polycaprolactone réticulé selon l'invention est stable en oxydation jusqu'à 4,5 V vs. Li⁰/Li.

### Cyclage en cellule symétrique Li vs Li

Chacun des électrolytes solides est incorporé au sein d'une cellule symétrique Li⁰/électrolyte/Li⁰.

Des tests électrochimiques sont effectués en cyclage galvanostatique, à différentes densités de courant par palier de 4 heures à une température de 60°C.

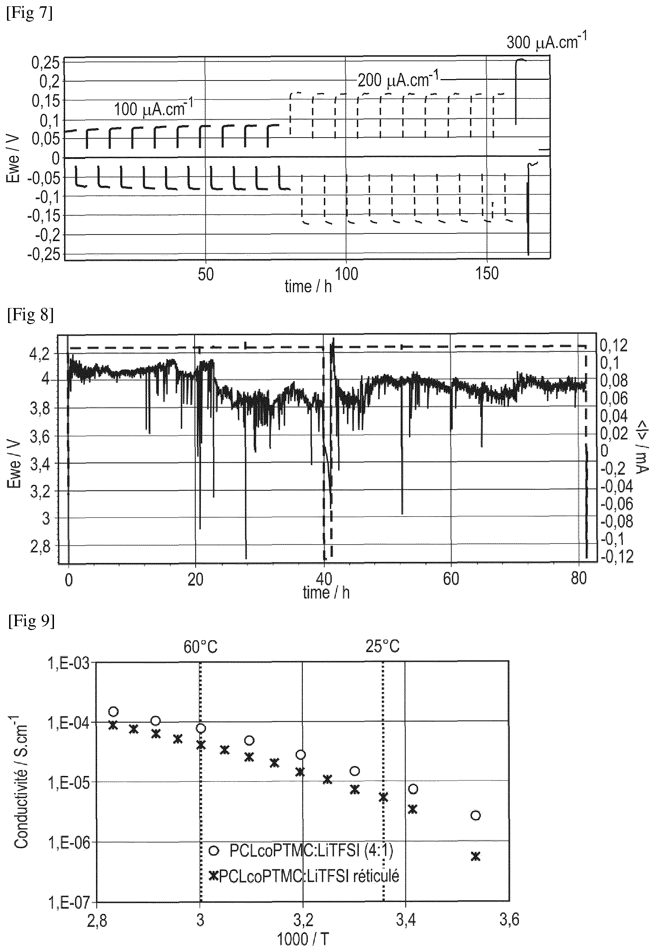

Les courbes de cyclage obtenu avec l'électrolyte à base de polycaprolactone non réticulé (« PCL :LiTFSI (4:1)») et avec l'électrolyte à base polycaprolactone réticulé selon l'invention (« PCL :LiTFSI (4:1) réticulé »), sont représentées respectivement en figures 6 et 7.

### Cyclage en batterie Li⁰ vs. LiNi_{1/3}Mn_{1/3}Co_{1/3}O₂

Chacun des électrolytes solides est incorporé au sein d'une batterie Li⁰ vs. LiNi_{1/3}Mn_{1/3}Co_{1/3}O₂. Des tests électrochimiques sont effectués en cyclage galvanostatique à un régime C/20 à une température de 60°C.

La courbe de cyclage obtenu avec l'électrolyte à base polycaprolactone non réticulé («PCL :LiTFSI (4:1)») est représentée en figure 8. L'électrolyte à base de polycaprolactone non réticulé ne permet pas de charger efficacement la batterie. La charge est fortement perturbée par la croissance de dendrites de lithium.

En revanche, l'électrolyte à base de polycaprolactone réticulé selon l'invention permet de charger efficacement la batterie de 2,5 mAh avec une capacité de 130 mAh.g⁻¹ au premier cycle à 60°C à un régime de C/20.

### Exemple 2

### 2.1. Préparation des électrolytes solides

### Préparation du copolymère polycaprolactone/polytriméthylène carbonate fonctionnalisé par des fonctions hydroxyle

Dans un ballon de 50 mL, sont introduits 13,5 mg de glycérol (1,47.10⁻⁴ mol ; 1 équivalent), 9,05 g de ε-caprolactone (7,94.10⁻² mol ; 540 équivalents), 0,90 g de triméthylène carbonate (8,82.10⁻³ mol; 60 équivalents), 100 mg de diphénylphosphate (4.10⁻⁴ mol; 2,72 équivalents) et solubilisés dans 10 mL de toluène. L'ensemble est placé sous argon et sous agitation mécanique à 50 °C pendant 48 heures.

Le milieu est ensuite refroidi à température ambiante, puis dilué avec 50 mL de tétrahydrofurane (THF) avant d'être précipité dans le méthanol (500 mL). Après filtration, le précipité est séché sous vide à 40 °C pendant 48 heures.

### Formation du film d'électrolyte solide

400 mg du copolymère synthétisé sont solubilisés dans 2 mL de tétrahydrofurane (THF) en présence de 100 mg de sel de lithium LiTFSI et de 33 mg d'hexaméthylène diisocyanate et de 10 µL de dilaurate de dibutylétain.

Le mélange est homogénéisé, dégazé sous vide puis coulé dans une boite de pétri en polypropylène. La boite de pétri est déposée à un endroit plan et sous ventilation de sorte à ce que le solvant s'évapore.

Une fois sec, le film obtenu est placé à une température de 80 °C pour réticulation par réaction des fonctions isocyanates avec les fonctions hydroxyles.

### Comparatif

A titre de comparaison, est formé un film d'électrolyte à base de copolymère polycaprolactone/polytriméthylène carbonate non réticulé.

Pour ce faire, 400 mg du copolymère polycaprolactone/polytriméthylène synthétisé sont solubilisés dans 2 mL de tétrahydrofurane (THF), en présence de 100 mg de sel de lithium LiTFSI. Le mélange est mis en œuvre sous la forme d'un film, par évaporation du solvant, dans les conditions décrites précédemment.

### 2.2. Caractérisation et performances des électrolytes

### Propriétés électrochimiques

Les résultats en termes de conductivité ionique en fonction de la température, obtenus en pile bouton entre deux électrodes Li⁰, sont représentés en figure 9. L'électrolyte solide selon l'invention permet d'atteindre des performances intéressantes à plus basse température, soit une conductivité de 6.10⁻⁶ S.cm⁻¹ à 25°C.

### Cyclage en batterie Li⁰ vs. LiNi_{1/3}Mn_{1/3}Co_{1/3}O₂

L'électrolyte solide est incorporé au sein d'une batterie Li⁰ vs. LiNi_{1/3}Mn_{1/3}Co_{1/3}O₂. Des tests électrochimiques sont effectués en cyclage galvanostatique à un régime C/20 à une température de 60 °C.

L'électrolyte à base de copolymère polycaprolactone/polytriméthylène carbonate (PCLcoPTMC) réticulé selon l'invention permet de charger efficacement la batterie de 2,5 mAh avec une capacité de 80 mAh.g⁻¹ au premier cycle à 60°C à un régime de C/20.

### Exemple 3

### Préparation du polyester (polycaprolactone) fonctionnalisé par des fonctions hydroxyles

Dans un ballon de 50 mL, sont introduits 20 mg de pentaérythritol (1,47.10⁻⁴ mol ; 1 équivalent), 10 g de ε-caprolactone (8,77.10⁻² mol ; 597 équivalents), 0,90 g de triméthylène carbonate (8,82.10⁻³ mol ; 60 équivalents), 100 mg de diphénylphosphate (4.10⁻⁴ mol ; 2,72 équivalents) et solubilisés dans 10 mL de toluène. L'ensemble est placé sous argon et sous agitation mécanique à 50 °C pendant 48 heures.

Le milieu est ensuite refroidi à température ambiante, puis dilué avec 50 mL de tétrahydrofurane (THF) avant d'être précipité dans le méthanol (500 mL). Après filtration, le précipité est séché sous vide à 40 °C pendant 48 heures

### Formation du film d'électrolyte solide

400 mg du polycaprolactone synthétisé sont solubilisés dans 2 mL de tétrahydrofurane (THF) en présence de 100 mg de sel de lithium LiTFSI, de 60 mg d'isocyanate de méthacryloyloxyéthyle et de 5 mg d'oxyde de diphényl(2,4,6-triméhtylbenzoyl)phoshine. Le mélange est homogénéisé, séché sous vide puis chauffé à une température de 80°C pour réaction des fonctions isocyanates avec les fonctions hydroxyles.

Cet électrolyte est ensuite mis en forme (par pressage à chaud ou par extrusion), puis réticulé sous irradiation UV (80W à une longueur d'onde de 365 nm).

### Liste des documents cités

[1] Mindemark, Journal of Power Sources 298 (2015) 166-170;
[2] Undin et al., Polymer 87 (2016) 17-25

## Revendications

1. Procédé de préparation d'un film d'électrolyte polymérique solide, comprenant au moins les étapes consistant en :
(i) disposer d'une composition, comprenant, dans un ou plusieurs solvant(s) :
- au moins un (co)polymère d'au moins un monomère cyclique choisi parmi les lactones et les carbonates cycliques de cinq à huit chaînons ; le ou lesdits (co)polymères présentant des fonctions hydroxyle terminales libres ;
- au moins une molécule organique, dite « agent de réticulation », porteuse d'au moins deux fonctions réactives, ladite molécule étant apte à permettre, sous l'action d'une stimulation extérieure, en particulier sous l'action de la chaleur et/ou d'un rayonnement UV, la réticulation du ou desdits (co)polymère(s) par réaction avec les fonctions hydroxyle du ou desdits (co)polymère(s) ;
- au moins un sel conducteur ionique, en particulier un sel de lithium ; et
- éventuellement, dans le cas d'un agent de réticulation porteur d'au moins une fonction réactive photosensible, au moins un composé photo-initiateur ;
(ii) former un film sec à partir de ladite composition, dans des conditions non propices à la réticulation du ou desdits (co)polymère(s) ; et
(iii) porter ledit film dans des conditions propices à la réticulation du ou desdits (co)polymères pour former le film d'électrolyte polymérique solide.

2. Procédé selon la revendication précédente, dans lequel ledit (co)polymère mis en œuvre en étape (i) est préalablement obtenu par (co)polymérisation d'un ou plusieurs monomères cycliques choisis parmi les lactones et les carbonates cycliques de cinq à huit chaînons, en présence d'au moins une molécule organique, dite « amorceur », portant au moins trois fonctions hydroxyle et, éventuellement, en présence d'au moins un catalyseur de la réaction de (co)polymérisation.

3. Procédé selon l'une quelconque des revendications précédentes, dans lequel le ou lesdits monomères cycliques sont de formule (I) suivante : 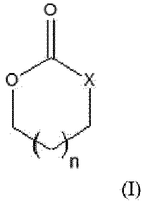 dans laquelle :
X représente un atome de carbone ou un atome d'oxygène ;
n vaut 0 est un entier compris entre 1 et 9, en particulier entre 1 et 3 ;
lesdits monomères étant éventuellement substitués, sur un ou plusieurs des atomes de carbone du cycle, par un ou plusieurs substituants, en particulier choisis parmi des groupements alkyles, en particulier en C₁ à C₅, linéaires ou ramifiés, saturés ou non ; des atomes d'halogène ; des fonction hydroxyle, carboxyle, -SO₃H et amine, en particulier - NH₂; lesdits groupements alkyles étant éventuellement porteurs d'un ou plusieurs groupes choisis parmi des atomes d'halogène, des fonctions hydroxyle, carboxyle, -SO₃H et amine, en particulier -NH₂.

4. Procédé selon l'une quelconque des revendications précédentes, dans lequel ledit (co)polymère mis en œuvre en étape (i) est formé à partir d'au moins un monomère de type lactone, en particulier de formule (II) suivante : 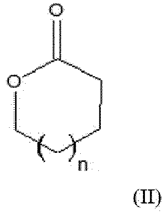 dans laquelle n est un entier allant de 1 à 9, en particulier de 1 à 3 ;
lesdits monomères étant éventuellement substitués, sur un ou plusieurs des atomes de carbone du cycle, par un ou plusieurs substituants, en particulier choisis parmi des groupements alkyles, en particulier en C₁ à C₅, linéaires ou ramifiés, saturés ou non ; des atomes d'halogène ; des fonction hydroxyle, carboxyle, -SO₃H et amine, en particulier - NH₂ ; lesdits groupements alkyles étant éventuellement porteurs d'un ou plusieurs groupes choisis parmi des atomes d'halogène, des fonctions hydroxyle, carboxyle, -SO₃H et amine, en particulier -NH₂ ;
en particulier à partir d'au moins l'ε-caprolactone.

5. Procédé selon l'une quelconque des revendications 2 à 4, dans lequel ledit amorceur est une molécule organique possédant de trois à cinq fonctions hydroxyle, de préférence trois ou quatre fonctions hydroxyle, en particulier ledit amorceur étant le pentaérythritol ou le glycérol ; et/ou
ledit catalyseur de la réaction de (co)polymérisation est choisi parmi des composés phosphorés substitués, tel que le diphénylphosphate (DPP), ou encore des composés de type métalliques tel que le diéthylhexanoate d'étain (Sn(Oct)2).

6. Procédé selon l'une quelconque des revendications 2 à 5, dans lequel ladite réaction de (co)polymérisation est opérée en milieu solvant, en particulier dans un ou plusieurs solvant(s) apolaire(s) et aprotique(s), en particulier choisis parmi le toluène, le dichlorométhane, le tétrahydrofurane et leurs mélanges, de préférence dans le toluène.

7. Procédé selon l'une quelconque des revendications précédentes, dans lequel ledit (co)polymère en étape (i) présente une masse moléculaire moyenne en nombre, notée Mn, supérieure ou égale à 3 kg.mol⁻¹, en particulier comprise entre 9 et 120 kg.mol⁻¹ et plus particulièrement comprise entre 30 et 80 kg.mol⁻¹.

8. Procédé selon l'une quelconque des revendications précédentes, dans lequel ledit agent de réticulation est choisi parmi :
- des molécules organiques, dite thermo-activables, possédant au moins deux fonctions, notées F1, chacune des fonctions étant apte à interagir, sous l'action de la chaleur, avec une fonction hydroxyle pour former une liaison covalente ; et
- des molécules organiques, dite photo-activables, possédant une fonction réactive F1 apte à interagir, sous l'action de la chaleur, avec une fonction hydroxyle pour former une liaison covalente ; et au moins une fonction F2 photosensible, réactive sous l'action d'un rayonnement UV, en présence d'au moins un composé photo-initiateur ;
en particulier ledit agent de réticulation est de formule (IV) suivante :
F1-E-G (IV)
dans laquelle :
F1 est une fonction apte à interagir, sous l'action de la chaleur, avec une fonction hydroxyle pour former une liaison covalente, en particulier F1 est une fonction isocyanate ;
E est un groupe espaceur organique, en particulier un groupe alkylène, linéaire ou ramifié, de préférence linéaire, ayant de 2 à 8 atomes de carbone, de préférence de 2 à 6 atomes de carbone ; et
G représente, soit une fonction F1, identique ou différente à la première fonction F1 ; soit une fonction F2 photosensible, réactive sous rayonnement UV.

9. Procédé selon la revendication 8, dans lequel :
- ledit agent de réticulation est une molécule organique portant au moins deux fonctions F1, en particulier deux fonctions F1, de préférence isocyanates, ledit agent de réticulation étant plus particulièrement choisi parmi les diisocyanates aliphatiques, tels que l'hexaméthylènediisocyanate ;
ladite composition en étape (i) comprenant plus particulièrement en outre au moins un catalyseur de la réaction de couplage entre une fonction hydroxyle et une fonction F1, en particulier isocyanate, ledit catalyseur étant par exemple le dilaurate de dibutylétain ; ou
- ledit agent de réticulation est une molécule organique portant une fonction F1, en particulier une fonction isocyanate, et au moins une fonction F2 photosensible réactive sous l'action d'un rayonnement UV, en particulier une fonction à insaturation(s) éthylénique(s), notamment une fonction (méth)acrylate ou allylique, ledit agent de réticulation étant plus particulièrement l'isocyanate de méthacryloyloxyéthyle ;
ladite composition en étape (i) comprenant plus particulièrement en outre au moins un composé photo-initiateur choisi parmi les oxydes de phosphine, par exemple l'oxyde de diphényl(2,4,6-triméthylbenzoyl)phosphine.

10. Procédé selon l'une quelconque des revendications précédentes, dans lequel ledit sel conducteur ionique est un sel de lithium, en particulier choisi parmi du LiPF₆ ou LiTFSI, de préférence du LiTFSI.

11. Procédé selon l'une quelconque des revendications précédentes, dans lequel le ou lesdits solvants sont choisis parmi l'acétone, le tétrahydrofurane et leurs mélanges.

12. Procédé selon l'une quelconque des revendications précédentes, dans lequel ledit film en étape (ii) est formé, en surface d'un substrat, par coulée/évaporation ou encore par enduction suivie d'un séchage dans des conditions propices à l'évaporation du ou desdits solvants, ledit film sec étant ensuite éventuellement désolidarisé dudit substrat pour former un film auto-supporté.

13. Procédé selon la revendication 9, dans lequel :
- dans le cas où ledit agent de réticulation est une molécule organique portant au moins deux fonctions F1, en particulier deux fonctions F1, la réticulation en étape (iii) est opérée en portant ledit film sec à une température propice à la réaction des fonctions F1, en particulier isocyanates, avec les fonctions hydroxyles du ou desdits (co)polymères ; et
- dans le cas où ledit agent de réticulation est une molécule organique portant une fonction F1, en particulier une fonction isocyanate, et au moins une fonction F2 photosensible réactive sous l'action d'un rayonnement UV, la réticulation en étape (iii) est opérée *via* l'étape ou les étapes suivantes :
(a) éventuellement, dans le cas où les fonctions F1 n'ont pas réagi lors de la mise en forme du film sec, avec les fonctions hydroxyles du ou desdits (co)polymères, porter ledit film à une température propice à l'interaction desdites fonctions F1, en particulier isocyanate, avec lesdites fonctions hydroxyles ; et
(b) porter ledit film sec à un rayonnement UV propice à l'activation des fonctions F2, en particulier (méth)acrylate ou allylique ; les étapes (a) et (b) pouvant être opérées consécutivement, dans cet ordre, ou simultanément.

14. Film d'électrolyte polymérique solide comprenant, voire étant formé, d'un réseau polymérique réticulé formé de (co)polymère(s) réticulés d'au moins un monomère cyclique choisi parmi les lactones et les carbonates cycliques de cinq à huit chaînons ; et au moins un sel conducteur ionique, en particulier un sel de lithium ; en particulier dans lequel le ou lesdits (co)polymère(s) sont formés à partir d'au moins un monomère cyclique de formule (I) telle que définie dans la revendication 3, en particulier de type lactone et plus particulièrement de formule (II) telle que définie dans la revendication 4.

15. Film d'électrolyte polymérique solide selon la revendication 14, ledit film présentant une épaisseur comprise entre 10 et 100 µm, en particulier entre 15 et 60 µm.

16. Utilisation d'un film d'électrolyte polymérique solide tel que défini selon l'une quelconque des revendications 14 et 15, dans un système électrochimique, en particulier dans une batterie au lithium, notamment une batterie lithium-métal.

17. Système électrochimique comprenant un film d'électrolyte polymérique solide tel que défini selon l'une quelconque des revendications 14 et 15, ledit système électrochimique étant plus particulièrement une batterie au lithium, notamment d'une batterie lithium-métal, en particulier comprenant une électrode en lithium métallique et une électrode comprenant du LiNi_{1/3}Mn_{1/3}Co_{1/3}O₂.
